# FASCICULE DE BREVET EUROPEEN

(11) **EP 2 554 044 B1**
(45) Date de publication et mention de la délivrance du brevet: **29.01.2014**
(21) Numéro de dépôt: 12174309.0
(22) Date de dépôt: 29.06.2012
(51) Int. Cl.: A01G 13/02, A01G 13/00

(54) **Contenant horticole apte à être operculé et procédé d'operculage**
Gartenbehälter, der mit einem Deckel verschließbar ist, und entsprechendes Abdeckverfahren
Horticultural container capable of being sealed and sealing method

(30) Priorité: 04.08.2011 FR 1157153
(43) Date de publication de la demande: 06.02.2013
(73) Titulaire: Frances, Denis, 34120 Pezenas (FR)
(72) Inventeur: Frances, Denis, 34120 Pezenas (FR)
(74) Mandataire: Domange, Maxime

(56) Documents cités:
- EP-A1- 0 466 621
- EP-A1- 1 681 245
- WO-A1-02/00507
- FR-A1- 2 629 424
- US-A- 5 054 234

## Description

### Arrière-plan de l'invention

La présente invention se rapporte au domaine général des contenants horticoles ou pots présentant une ouverture supérieure entourée d'un rebord supérieur.

Plus particulièrement, l'invention s'intéresse aux contenants horticoles susceptibles d'être munis d'un opercule sur leur ouverture supérieure. Ce genre de contenants horticoles est utilisé en pépinières et en horticulture. Ces contenants operculés présentent donc un cache de protection du substrat, ce substrat étant préalablement placé dans le contenant. Généralement, le matériau de l'opercule est un matériau non tissé qui réalise, alors, une double fonction d'occultation de la lumière et de perméabilité à l'air et à l'eau. Ce cache de protection freine entre autres la prolifération des mauvaises herbes. La présence de l'opercule permet ainsi de supprimer les opérations de désherbage, tant chimique que manuel. Cela représente un gain de temps et de qualité de la culture.

De façon connue, l'opercule est percé en son centre, notamment sous forme d'une incision en forme de croix pour laisser passer la tige du végétal lorsque celui-ci pousse à travers, ledit contenant horticole étant rempli d'un substrat ou de terre.

De façon connue encore, ledit contenant horticole comprend un pot dont la paroi latérale de forme cylindrique à section circulaire en rectangle ou cylindro-conique ou cylindro-pyramidale, s'étend en élévation au-dessus d'une paroi de fond, le bord supérieur de ladite paroi latérale étant surmonté d'un rebord supérieur plat périphérique ou collerette, dont le bord interne délimite une ouverture supérieure dudit pot.

De façon connue encore, l'opercule est constitué d'une feuille de matériaux non tissés ou d'un film micro-perforé, présentant une perméabilité apte à permettre des échanges d'air et d'eau avec l'extérieur et permettant ainsi un arrosage par aspersion d'eau pardessus l'opercule, tout en évitant la propagation fongique.

L'utilisation d'un cache protecteur sur un contenant horticole est, par exemple, connue du brevet FR 2 146 516. Dans ce document, il est prévu d'utiliser une feuille de matière déformable, en général de matière plastique, reliée au contour du cache et épousant la forme du contenant, ou pot. Cette feuille de matière est généralement percée selon une fente continue permettant d'engager la tige lors de la mise en place de ces caches. Ces caches protecteurs sont mis en place de manière manuelle.

Cependant, il existe aussi un procédé de protection d'un contenant horticole automatique. Ce procédé est décrit dans le document EP 0 466 621. Le procédé automatique décrit dans ce document permet de réaliser le thermocollage d'un opercule sur des contenants utilisés en pépinières. Avec ce procédé, il est observé que le thermocollage est souvent irrégulier et qu'il est difficile d'assurer sa qualité. Cela pénalise la production des contenants operculés.

En effet, un thermocollage de mauvaise qualité entraîne des arrêts à répétition de la machine permettant de réaliser le procédé automatique. En présence de thermocollages défaillants en cours de production, les contenants sont généralement jetés et mis au rebut et cela pénalise le rendement économique du procédé automatique d'operculage des contenants.

Au-delà de ces problèmes de production des contenants operculés, il est aussi observé des décollements des toiles d'operculage ultérieurs. En effet, les irrégularités de thermocollage engendrent des décollements lors des différentes manipulations subies par le pot, qui peuvent être l'acheminement du pot vers les aires de stockage, le vent soulevant la toile et l'arrachant, la préparation de commandes, le transport, etc.

Ces décollements favorisent le développement des mauvaises herbes puisque la toile ne remplit plus sa fonction de protection.

En pratique une température de thermo-soudage de l'ordre de 240 à 250°C pendant une seconde et demie s'avère suffisante pour réaliser la jonction entre l'opercule et le contenant.

Un thermocollage plus fiable pourrait être obtenu en augmentant le temps de chauffe lors de l'étape d'operculage afin de permettre une fusion plus étendue. Cependant, augmenter les temps de fusion conduit à ralentir la cadence de la machine.

Sur un autre plan, il est observé que la durée de culture ne peut pas être prolongée trop longtemps sans voir la toile de l'opercule se détériorer. En effet, avec un grammage inférieur à 65 g/m², les opercules ont une durée de vie d'environ 12 mois. Au-delà, ils se détériorent et se trouent laissant ainsi entrer la lumière sur le substrat. Cela conduit au développement d'adventices néfastes pour la croissance de la plante.

Dans la mesure où une toile plus épaisse permettrait une meilleure tenue dans le temps et une meilleure efficacité du point de vue du développement des mauvaises herbes puisque la toile occulterait alors davantage la lumière, il est souhaitable de faire évoluer le procédé automatique vers des solutions permettant d'utiliser une toile plus épaisse.

En outre, lors de la mise en place de l'opercule sur le conteneur au moyen d'une plaque chauffante plane tel que décrit ci-après, la toile constitutive de l'opercule est tendue par-dessus le rebord supérieur du conteneur. On observe alors ultérieurement un décollement de l'opercule au moment des fortes chaleurs estivales du fait des différences de dilatation du matériau constitutif du conteneur tel que du polypropylène et du matériau constitutif de l'opercule. Une toile d'opercule plus épaisse atténuerait ce phénomène.

Toutefois, actuellement, l'utilisation d'une toile plus épaisse n'est pas compatible avec un thermocollage régulier et efficient. Un opercule trop épais donne lieu à des irrégularités de thermocollage pénalisant la production par des arrêts de machines et/ou des mises au rebut d'une partie de la production défectueuse. Ces irrégularités de collage engendrent des décollements lors des différentes manipulations subies par le pot tel que l'acheminement du pot vers les airs de stockage ou pendant le transport, le vent pouvant soulever l'opercule et ainsi l'arracher.

Dans EP 1 681 245, on décrit un conteneur en polyester présentant certaines caractéristiques de cristallinité, comprenant un rebord supérieur destiné à être recouvert par thermo-scellage par un opercule. Du fait des caractéristiques de la résine polyester mise en oeuvre, la température et la durée de fusion du matériau du conteneur sont relativement trop élevés ce qui limite les possibilités quant au choix de l'opercule. Dans ce document, on propose d'intercaler un cordon de matériaux adhésifs formant une protubérance en sous-face de l'opercule ou par-dessus le rebord supérieur du conteneur.

Ainsi, dans EP 1681245, on propose de mettre en oeuvre une protubérance dans un matériau présentant des caractéristiques de cristallinité réduite au centre et/ou en partie périphérique du rebord supérieur du conteneur. Les procédé et dispositif décrits dans EP 1 681 245 ne sont pas appropriés pour réaliser un contenant horticole dans un autre matériau, notamment en polypropylène, dont l'opercule est réalisé dans une feuille de matériau souple ou semi-rigide du type décrit ci-dessus.

Dans le document FR 2 629 424, on décrit également un récipient thermoplastique comportant une collerette destiné à recevoir un opercule, la face supérieure de la collerette étant munie d'un cordon plein et continu permettant le thermo-soudage dudit opercule et constituant ainsi un joint d'étanchéité en surépaisseur de la collerette entre le récipient et l'opercule, permettant le thermo-soudage dudit opercule. Pour ce faire, le cordon formant une protubérance à la surface du rebord supérieur du récipient après thermo-soudage est décalé vers le centre du rebord supérieur par rapport au bord interne du rebord supérieur, du fait qu'il est formé par emboutissage par-dessus celui-ci.

### Objet et résumé de l'invention

La présente invention a donc pour but principal de palier les inconvénients rencontrés avec les contenants horticoles de l'art antérieur et avec les procédés d'operculage décrits dans l'art antérieur, en proposant un contenant horticole amélioré présentant une ouverture supérieure entourée d'un rebord supérieur et apte à être operculée par un opercule, le contenant comprenant une protubérance circonférentielle en matière fusible de température de fusion inférieure à la température de fusion de l'opercule, sur son rebord supérieur autour de son ouverture supérieure, comme décrit dans la revendication 1.

La présence d'une protubérance circonférentielle sur le rebord supérieur du contenant horticole, autour de son ouverture supérieure, permet de mieux localiser la zone de fusion du pot. En effet, selon le principe de l'operculage, la température de fusion du matériau utilisé pour l'opercule est supérieure à la température de fusion du matériau constitutif du contenant à operculer. De cette façon, le matériau placé sur le rebord supérieur du pot fond et s'imprègne dans le matériau de l'opercule.

Selon la présente invention, la protubérance circonférentielle est située au niveau de la bordure interne du rebord supérieur délimitant ladite ouverture supérieure.

La présence de la protubérance circonférentielle au niveau de la bordure interne du rebord supérieur permet de mieux consolider le bord interne du rebord supérieur du contenant horticole. Or, ce bord interne est la zone d'appui la plus sollicitée en compression lors du thermocollage de l'opercule par-dessus le rebord supérieur. La protubérance circonférentielle est alors idéalement située, car elle permet de faire une soudure localisée au point assurant la meilleure résistance à la compression lors de l'opération du thermocollage de l'opercule.

En outre, le fait que la protubérance soit en prolongation de la paroi latérale du contenant horticole, juste au-dessus de celle-ci en élévation, permet en outre de faciliter l'empilement et le désempilement des pots les uns sur les autres avant mise en place de l'opercule. En effet, la position de ladite protubérance permet de rigidifier ladite collerette, notamment lorsque l'épaisseur du matériau constitutif dudit contenant horticole est relativement faible, notamment inférieure à 2 mm.

Et, dans ce cas, le rebord supérieur se déforme relativement facilement et a tendance à rendre le désempilement des pots, après empilage, relativement difficile en pratique.

D'autre part, cette position de la protubérance contribue également à favoriser la mise en place d'un opercule avec une forme légèrement flasque et/ou concave de l'opercule, permettant de supporter une dilatation différentielle matériau constitutif du contenant horticole par rapport à la dilatation de l'opercule, notamment en cas de température élevée l'été.

Cette caractéristique de forme flasque et/ou concave de l'opercule est également favorisée par le fait que l'on peut mettre en oeuvre un opercule de relativement plus grand grammage, notamment d'au moins 65g/m².

Selon les principes de l'operculage, l'opercule doit être le fruit d'un compromis entre une épaisseur suffisante pour conférer une résistance mécanique correcte et une épaisseur suffisamment faible pour permettre la conduction de la chaleur dans son épaisseur jusqu'à fusion de la matière composant la protubérance circonférentielle.

En présence de la protubérance circonférentielle, la fusion est localisée sur cette protubérance et est ainsi davantage concentrée par rapport à un operculage effectué directement sur le rebord supérieur du contenant. Avec l'invention, des toiles plus épaisses au-delà de 65 g/m² peuvent alors être soudées de manière correcte grâce à la présence de la protubérance circonférentielle. Il est donc possible d'utiliser des non tissés plus épais et donc plus opaques, ces non tissés solutionnant alors le problème de la durée de vie. En effet, l'utilisation d'une toile plus épaisse que 65 g/m² permise par l'invention, permet d'obtenir davantage d'opacité, et donc une meilleure occultation de la lumière, et une plus grande épaisseur qui confère une meilleure résistance à la perforation et une meilleure tenue dans le temps de l'opercule.

Une des faiblesses du procédé connu dans l'art antérieur consiste en l'absence d'un thermocollage sur la surface plane la plus importante, soit sur la partie horizontale du rebord supérieur du pot représentée par la partie horizontale de la collerette. En effet, le thermocollage se fait généralement au niveau de l'angle formé à la jonction de la collerette et de la paroi du pot. Ainsi, au moment de la pression, on observe un écrasement et un collage sur l'angle intérieur de la collerette, ce qui résulte en un soudage sur le contour interne de la collerette, irrégulier et souvent défaillant. L'invention permet de résoudre ce problème.

Ainsi, l'invention permet d'optimiser le contact entre la toile de l'opercule et le contenant sous l'effet d'une plaque chauffante d'operculage. Il a, en effet, été remarqué que la réduction du point de contact entre la toile de l'opercule et le contenant permet d'obtenir une opération de thermocollage de meilleure qualité.

Plus particulièrement, la protubérance circonférentielle est intégrée au contenant lors du moulage du contenant lui-même. En d'autres termes, lesdits paroi latérale et rebord supérieur ainsi que ladite protubérance dudit contenant sont constitués d'un même matériau plastique et viennent de matière.

Dans une application préférée de l'invention, le contenant horticole selon l'invention est revêtu d'un opercule constitué d'une feuille de matériau non-tissé maintenue collée par imprégnation locale du matériau de ladite protubérance circonférentielle obtenue par fusion dudit matériau de ladite protubérance circonférentielle, de préférence ledit contenant horticole rempli de terre ou d'un substrat.

De préférence encore, ledit opercule présentant une forme détendue, flasque et/ou légèrement concave, de préférence comprenant un perçage central, notamment en forme de croix, apte à laisser passer la tige d'un végétal lorsque celui-ci pousse à travers.

Du fait de la consolidation et rigidification de ladite collerette, il est possible de mettre en oeuvre un dit opercule, présentant les caractéristiques avantageuses particulières suivantes :
- ledit opercule est réalisé dans une feuille de matériau fibreux non-tissé, de préférence à base de fibres de polyester et viscose ; et
- ledit opercule présente un grammage d'au moins 65g/m², de préférence inférieur à 100g/m², de préférence encore de 65 à 75g/m².

Cette valeur de limite supérieure de 100g/m² est dictée essentiellement par la nécessité que l'épaisseur de l'opercule doit être suffisamment réduite pour permettre une conduction rapide de la chaleur à travers son épaisseur afin d'obtenir une fusion rapide du matériau constitutif de ladite protubérance en sous-face de l'opercule.

Selon d'autres caractéristiques avantageuses :
- ladite protubérance présente une hauteur inférieure ou égale à l'épaisseur dudit rebord supérieur et de ladite paroi latérale dudit contenant horticole, et, de préférence, ladite protubérance présente une hauteur supérieure à 50% de l'épaisseur dudit rebord latéral et de ladite paroi latérale dudit contenant horticole ; et
- l'épaisseur de ladite protubérance dudit contenant horticole est de 0,5 à 2 mm, de préférence de 0,8 à 1 mm ;
- l'épaisseur dudit rebord supérieur et de ladite paroi latérale dudit contenant horticole est de 0,5 à 2 mm, de préférence de 0,8 à 1 mm.

Ainsi, la protubérance après thermocollage de l'opercule est entièrement fondue et ne forme plus de surépaisseur entre le rebord supérieur et l'opercule.

Dans un mode de réalisation préférentiel, la section de la protubérance circonférentielle dans un plan axial vertical dudit contenant horticole est triangulaire ou trapézoïdale.

Avec une telle section de la protubérance circonférentielle, on assure une fusion de celle-ci optimale commençant par la pointe du triangle ou trapèze et évoluant vers sa base augmentant progressivement la quantité de matériau fondu. Une imprégnation optimale de la matière constituant le contenant horticole dans la toile de l'opercule est alors obtenue. Aussi, la forme pointue de la protubérance circonférentielle permet un début de fusion plus rapide de la matière fusible au contact de la toile, c'est-à-dire la protubérance circonférentielle, puisque la zone de contact est alors circulaire de faible largeur.

De préférence, la section de la protubérance dans un dit plan axial vertical est trapézoïdale avec une petite base supérieure dudit trapèze de largeur inférieure ou égale à un tiers de la largeur de la grande base inférieure dudit trapèze.

Ce mode de réalisation permet d'obtenir un contact annulaire entre l'opercule et le contenant dès le début. La forme globalement diamantée de la protubérance circonférentielle trapézoïdale permet de conserver une fusion rapide de celle-ci et une imprégnation optimale dans la toile de l'opercule tout en stabilisant le contact entre l'opercule et le contenant au début de l'étape d'operculage.

Dans un mode de réalisation préférentiel, la protubérance circonférentielle est intégrée au contenant lors du moulage du contenant lui-même.

L'intégration directe de la protubérance circonférentielle sur le contenant lors du moulage du contenant horticole permet de fabriquer le contenant horticole selon l'invention avec une seule étape de fabrication qui est une étape de moulage.

Dans une réalisation préférentielle, l'intégration de la protubérance circonférentielle lors du moulage est obtenue par rainurage préalable du moule du contenant.

La simple réalisation d'un rainurage préalable sur le moule permettant d'obtenir le contenant par moulage permet de mettre en oeuvre l'invention à moindre coût. En effet, un moule déjà connu peut être utilisé pour mettre en oeuvre l'invention dès lors qu'il est susceptible d'être rainuré au niveau du rebord supérieur du contenant.

L'obtention d'un tel contenant est autorisée par l'invention, typiquement après application d'un procédé automatique appliquant une chaleur au niveau de la protubérance circonférentielle afin de provoquer sa fusion selon les principes de l'operculage d'un récipient.

Un tel moule permet d'obtenir la réalisation préférentielle d'un contenant horticole selon l'invention.

L'invention concerne aussi un procédé d'operculage d'un contenant horticole comprenant les étapes successives consistant à :
- réaliser un contenant horticole présentant une ouverture supérieure entourée d'un rebord supérieur d'une protubérance circonférentielle en matière fusible sur son rebord supérieur autour de son ouverture supérieure,
- poser un opercule tramé présentant une température de fusion supérieure à la température de fusion de la protubérance circonférentielle sur le rebord supérieur, cet opercule reposant alors sur la protubérance circonférentielle,
- amener une plaque chauffante de taille telle qu'elle recouvre la protubérance circonférentielle sur la protubérance circonférentielle,
- provoquer la fusion de la protubérance circonférentielle permettant de sceller l'opercule par pénétration de matière fondue dans la trame de l'opercule.

Ce procédé permet d'obtenir un contenant operculé avec une bonne résistance à l'usure et avec une assurance de thermocollage de qualité de l'opercule.

Avantageusement, la première étape est réalisée par moulage, avec un moule du contenant comprenant une rainure au niveau de la zone de moulage du rebord supérieur, ladite rainure étant apte à former une dite protubérance circonférentielle située juste en bordure interne du rebord supérieur lors du moulage dudit contenant.

Un tel moule permet donc le moulage d'un contenant horticole selon l'invention de manière directe et en une unique étape de moulage.

Selon une caractéristique préférentielle, l'étape d'amenée de la plaque chauffante consiste à amener une plaque chauffante présentant une excroissance d'embossage de préférence de forme tronconique, de diamètre inférieur à l'ouverture supérieure du contenant horticole.

Cet embossage en sous-face de la plaque chauffante et en contact avec la partie centrale de l'opercule assure une isolation thermique relative de ladite partie centrale de l'opercule, qui préserve la structure du matériau constitutif de l'opercule et donc sa résistance dans le temps, seule la partie périphérique circonférentielle de la plaque en vis-à-vis de ladite protubérance étant soumise à la température plus importante de la plaque chauffante réalisant la fusion de ladite protubérance.

Cette caractéristique particulière de la plaque permet aussi d'obtenir un operculage avec une toile détendue de forme flasque et/ou concave. En détendant la toile, on évite ainsi le décollage de celle-ci. Une meilleure efficacité au niveau de la fonction de protection contre les mauvaises herbes est ainsi obtenue.

Cette caractéristique permet aussi d'éviter une trop forte tension de la toile due aux différences de dilatation entre les différents matériaux. En effet, on sait que des décollements de la toile se produisent au moment des fortes chaleurs estivales à cause des différences de dilatation entre le matériau constituant du contenant horticole et le non tissé. Cela est dû à un phénomène de tension excessive de la toile sur le contenant lors de la mise en place de celle-ci, au moyen d'un dispositif de thermocollage, typiquement une plaque chauffante plane.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
Les figures 1A et 1B montrent un contenant horticole selon l'invention et un détail du rebord supérieur du contenant selon l'invention ;
La figure 2 montre une section particulière d'une protubérance circonférentielle selon l'invention ;
Les figures 3A et 3B montrent schématiquement le procédé d'operculage selon l'invention ;
La figure 4 montre une plaque chauffante selon un mode de réalisation particulier du procédé d'operculage selon l'invention ;
Les figures 5A, 5B et 5C montrent schématiquement le procédé d'operculage selon l'invention avec la plaque chauffante de la figure 4 et le pot avec operculage obtenu ainsi.

### Description détaillée d'un mode de réalisation

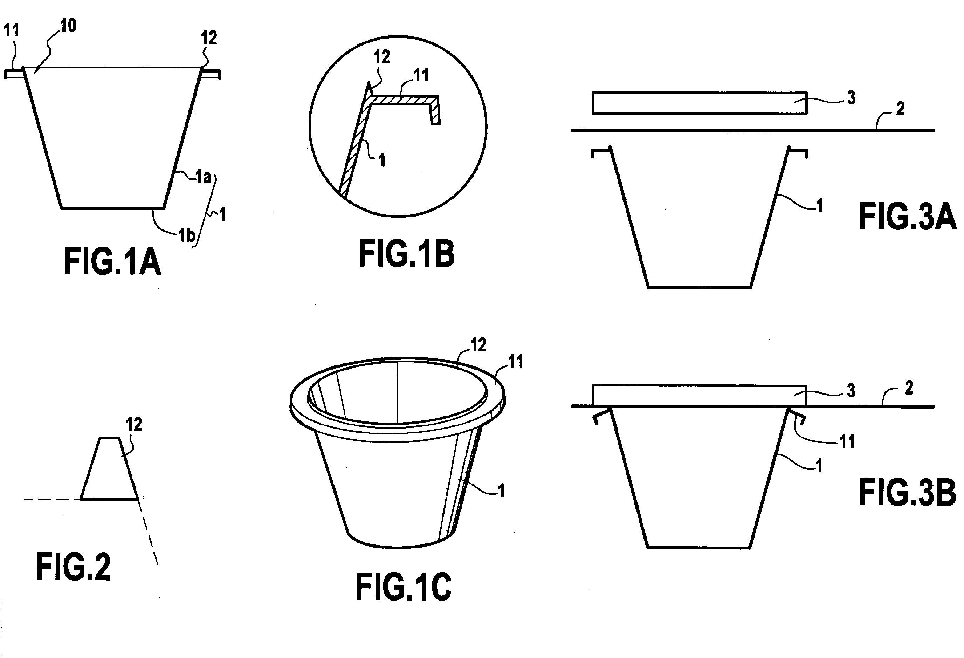

La figure 1A montre un contenant horticole 1 comprenant une paroi de fond 1b surmontée d'une paroi latérale 1a cylindro-conique avec une ouverture supérieure 10, entourée d'une collerette ou rebord supérieur 11, ici matérialisé par un léger épaulement sur le contour de l'ouverture 10. Une telle structure de contenant horticole ou pot est parfaitement connue de l'homme du métier.

La figure 1B montre un détail du rebord supérieur 11 du contenant horticole 1 selon l'invention. Le rebord supérieur 11 est ici muni sur sa bordure interne d'une protubérance circonférentielle 12. Ici, la protubérance circonférentielle 12 présente une section triangulaire s'élevant au-dessus du rebord supérieur 11. Ici, selon une réalisation préférentielle, la paroi du pot 1 est située à l'aplomb de la protubérance 12.

Typiquement, la hauteur de la protubérance circonférentielle sera de l'ordre de l'épaisseur du rebord supérieur 11 et de la paroi latérale 1a du pot 1, ici de l'ordre de 1 mm. Cette hauteur sera avantageusement variable en fonction de l'épaisseur de la paroi du pot. Plus les parois du pot seront épaisses, plus la hauteur de la protubérance sera importante. On observera alors typiquement des hauteurs de protubérance circonférentielle entre 0,5 mm et 7 mm.

La figure 1C montre une vue en perspective du pot selon l'invention montré sur les figures 1A et 1B.

Le contenant horticole 1 est avantageusement réalisé dans un matériau de type polypropylène, par exemple de couleur noire. Le contenant 1 sera avantageusement d'aspect lisse et produit selon un procédé par moulage, le moule ayant été préalablement fabriqué par le constructeur. Le matériau, à partir duquel le contenant est réalisé, fond typiquement entre 160 et 180°C.

La figure 2 montre une autre section pour une protubérance circonférentielle 12 selon l'invention. Ici, la section est trapézoïdale. Avantageusement cette section présente une grande base de largeur 0,75 mm, une hauteur de 0,80 mm et une petite base d'une largeur de 0,25 mm. Cette section est équivalente à une section triangulaire tronquée sur sa partie supérieure. Cette caractéristique permet d'obtenir une zone de fusion annulaire plus large que lorsqu'une section triangulaire est utilisée.

Le procédé selon l'invention est illustré à l'aide des figures suivantes. La figure 3A montre le pot 1, une toile 2 d'operculage et une plaque chauffante 3, avant la réalisation de l'operculage.

La toile présente avantageusement une structure fibreuse non tissée permettant les échanges gazeux et une certaine perméabilité autorisant un arrosage par aspersion qui convient bien à ce type de contenant. L'operculage avec une telle toile non tissée évite aussi les propagations fongiques.

Typiquement, la toile est réalisée en matériau non tissé à base de fibres de polyester et viscose présentant un point de fusion supérieur au polypropylène constituant le contenant horticole 1, commercialisé par la société TEFISA (Espagne). La toile est partiellement biodégradable, dans la mesure où le viscose se dégrade avec le temps, ce qui n'est pas le cas du polyester et du liant permettant de fabriquer la toile. Cependant, il a été observé que des toiles fines ou inférieures à 65 g/m², présentent une dégradation rapide sur une période de 12 mois.

Typiquement, la couleur de la toile est noire et, dans tous les cas, opaque afin d'éviter les germinations de graines. La température de fusion de la toile est généralement de l'ordre de 350°C.

La plaque chauffante 3 dispose d'un mécanisme de chauffage qui lui permet d'atteindre la température de 275°C au moment du soudage. La plaque est avantageusement réalisée à partir d'aluminium recouvert d'un revêtement PTFE (téflon).

La figure 3B montre le phénomène se produisant lorsque la plaque chauffante 3 appuie sur le rebord supérieur 11 du contenant horticole 1. Typiquement, la compression de la plaque chauffante 3 est de 5 kg par carré de 20 mm de côté. On observe que la pression sur le rebord supérieur 11 du pot 1 entraîne un léger repliement ce celui-ci vers le bas. On comprend bien, sur cette figure, le positionnement avantageux de la protubérance circonférentielle 12 au niveau de la bordure interne du rebord supérieur 11. En effet, sa présence ajoute de la matière au niveau de ce point très particulier du rebord supérieur 11 qui court juste au-dessus de la paroi latérale du contenant horticole 1.

Le fait que la protubérance circonférentielle 12 soit en prolongation de la paroi latérale, en élévation sur le pot 1, permet en outre de ne pas gêner l'empilement et le dé-empilement des pots les uns sur les autres. On remarque que la protubérance circonférentielle 12 présente avantageusement une hauteur sensiblement égale à l'épaisseur du pot, comprise entre 0,8 et 1 mm.

On sait par ailleurs qu'un espace doit être maintenu entre la surface supérieure du substrat introduit dans le contenant horticole 1 et l'opercule 2, de manière à éviter la germination des graines de mauvaises herbes à l'intérieur de l'opercule 2 sous l'effet de l'humidité du substrat, et, ce, en cas de contact entre le substrat et l'opercule 2. Il existe généralement un espace suffisant entre le point haut du substrat et le plan du rebord supérieur 11 du contenant horticole 1.

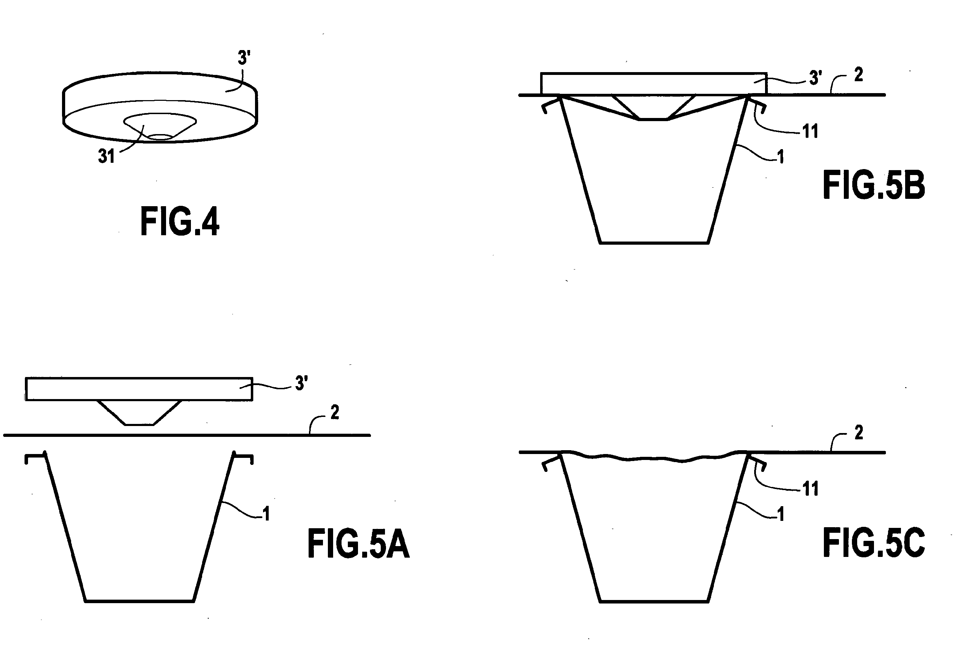

Ainsi, comme montré sur la figure 4, l'invention s'intéresse à améliorer encore davantage l'operculage du contenant horticole 1 en assurant que l'opercule 2 présente une forme légèrement concave dès son operculage. Cette caractéristique est permise par la présence d'un espace entre le substrat et le plan du rebord supérieur 11.

En assurant une concavité de l'opercule, celui-ci est ainsi légèrement détendu. Cela lui permet de supporter la dilatation différentielle du contenant horticole 1 par rapport à sa propre dilatation. Cela est particulièrement utile en cas de températures élevées l'été et, notamment, pour les températures supérieures ou égales à 40°C. Ces températures sont, en effet, bien connues pour entraîner une tension excessive de l'opercule 2.

L'invention concerne donc encore un procédé d'operculage, dans lequel la plaque chauffante, notée 3' sur la figure 4, a été modifiée de manière à comprendre une excroissance d'embossage centrale 31 en sous-face destinée à rentrer en contact avec la partie centrale de l'opercule, présentant une surface au moins partiellement conique. Avantageusement, ainsi que représenté sur la figure 4, l'excroissance 31 est de forme conique tronquée, la base du cône présentant un diamètre, avantageusement égal à 90 mm, alors que la surface au niveau de la troncature du cône présente un diamètre de 30 mm. On note ici que la base du cône aura une dimension inférieure au diamètre minimal de l'ouverture supérieure 10 la plus petite pouvant être operculée avec cette plaque chauffante 3'. La plaque 3' pourra, quant à elle, avantageusement, présenter un diamètre assez important, par exemple de 240 mm. L'excroissance 31 présente, avantageusement, une épaisseur de 20 mm et est centrée sur la plaque 3', par exemple, en laissant 75 mm de part et d'autre. L'épaisseur de la plaque 3' pourra est par exemple de l'ordre de 35 mm, ainsi que cela est déjà le cas avec les plaques chauffantes planes connues.

La figure 5A montre la plaque chauffante 3' de la figure 4 en préparation et chauffage au-dessus du pot 1 et de l'opercule 2. Sur la figure 5B, la plaque chauffante 3' est en contact avec l'opercule 2 et provoque une détente de celui-ci par rapport au procédé montré sur la figure 3 grâce à la présence de l'excroissance 31 centrale sur la plaque chauffante 3'. Le résultat obtenu est montré sur la figure 5C où l'opercule 2 est détendu, soit légèrement flasque. Cela permet d'éviter de trop importantes tensions sur le contour de l'opercule fixé grâce au procédé de l'invention sur le contour du pot lors de grandes chaleurs.

On remarque enfin que diverses mises en oeuvre peuvent être réalisées selon les principes de l'invention.

En outre, la présence de cet embossage en sous-face de la plaque chauffante procure un effet technique avantageux additionnel en ce qu'étant plus épais, il monte en température moins rapidement que la partie périphérique et protège ainsi la toile de l'opercule dans sa partie centrale de toute déformation dans sa structure qui pourrait résulter d'une montée en température excessive.

En l'espèce, la plaque chauffante présente la température la plus élevée dans sa zone périphérique en vis-à-vis de ladite protubérance.

Ainsi, lorsque l'opercule est percé en son centre comme c'est le cas pour permettre le passage de la tige du végétal en croissance, les parties de la toile découpée en son centre restent bien planes et ne se déforment pas en courbure, comme cela serait le cas si la structure du matériau constitutif de la toile subissait une chaleur excessive dans sa partie centrale.

## Revendications

1. Contenant horticole (1) présentant une ouverture supérieure (10) entourée d'un rebord supérieur (11) et apte à être operculée par un opercule (2), ledit contenant (1) comprenant une protubérance circonférentielle (12) en matière fusible de température de fusion inférieure à la température de fusion de l'opercule (2) sur son rebord supérieur (11) autour de son ouverture supérieure (10), **caractérisé en ce que** la protubérance circonférentielle (12) est située au niveau de la bordure interne du rebord supérieur (11) délimitant ladite ouverture supérieure (10).

2. Contenant horticole selon la revendication 1, **caractérisé en ce que** la protubérance circonférentielle (12) est intégrée au contenant lors du moulage du contenant (1) lui-même.

3. Contenant selon l'une des revendications précédentes, **caractérisé en ce qu'**il est revêtu d'un opercule constitué par une toile ou feuille de matériau non-tissé maintenue collée par imprégnation locale du matériau de ladite protubérance circonférentielle (12) obtenue par fusion dudit matériau de ladite protubérance circonférentielle (12) en matière fusible de température de fusion inférieure à la température de fusion de l'opercule (2), de préférence ledit contenant horticole étant rempli de terre ou d'un substrat.

4. Contenant horticole selon l'une des revendications 1 à 3, **caractérisée en ce qu'**il est revêtu d'un opercule présentant une forme détendue, flasque et/ou légèrement concave, comprenant de préférence un perçage central apte à laisser passer la tige d'un végétal lorsque celui-ci pousse à travers ledit perçage.

5. Contenant horticole selon l'une des revendications 3 ou 4 **caractérisé en ce que** ledit opercule est réalisé dans une feuille de matériau fibreux non-tissé, de préférence à base de fibres de polyester et viscose.

6. Contenant horticole selon l'une des revendications 3 à 5 **caractérisé en ce que** ledit opercule présente un grammage d'au moins 65g/m², de préférence inférieur à 100g/m², de préférence encore de 65 à 75g/m².

7. Contenant horticole selon les revendications précédentes, **caractérisé en ce que** la section de la protubérance circonférentielle (12) est triangulaire ou trapézoidale.

8. Contenant horticole selon l'une des revendications précédentes, **caractérisé en ce que** ladite protubérance (12) présente une hauteur inférieure ou égale à l'épaisseur dudit rebord supérieur (11) et de la paroi latérale (1a) dudit contenant horticole, et, de préférence, ladite protubérance présente une hauteur supérieure à 50% de l'épaisseur dudit rebord supérieur et de ladite paroi latérale dudit contenant horticole.

9. Contenant horticole selon l'une des revendications précédentes, **caractérisé en ce que** l'épaisseur de ladite protubérance est de 0,5 à 2 mm, de préférence de 0,8 à 1 mm.

10. Contenant horticole selon l'une des revendications 8 ou 9, **caractérisé en ce que** l'épaisseur dudit rebord supérieur et de ladite paroi latérale dudit contenant horticole sont de 0,5 à 2 mm, de préférence de 0,8 à 1 mm.

11. Procédé de réalisation et d'operculage d'un contenant horticole (1) selon les revendications 1 à 10, comprenant les étapes successives consistant à :
- réaliser un contenant horticole (1) présentant une ouverture supérieure (10) entourée d'un rebord supérieur (11) d'une protubérance circonférentielle (12) en matière fusible sur son rebord supérieur (11) autour de son ouverture supérieure (10),
- poser un opercule (2) tramé présentant une température de fusion supérieure à la température de fusion de la protubérance circonférentielle (12) sur le rebord supérieur (11), cet opercule (2) reposant alors sur la protubérance circonférentielle (12),
- amener une plaque chauffante (3) de taille telle qu'elle recouvre la protubérance circonférentielle (12) au contact de la protubérance circonférentielle,
- provoquer ainsi la fusion de la protubérance circonférentielle (12) permettant de sceller l'opercule (2) par pénétration de la matière fondue de la protubérance circonférentielle (12) dans la trame de l'opercule (2).

12. Procédé selon la revendication 11, **caractérisé en ce que**, la première étape de réalisation dudit contenant est réalisée par moulage avec un moule du contenant (1), comprenant une rainure au niveau de la zone de moulage du rebord supérieur (11), ladite rainure étant apte à former une dite protubérance circonférentielle située juste en bordure interne du rebord supérieur (11) lors du moulage dudit contenant.

13. Procédé selon l'une des revendications 11 ou 12, **caractérisé en ce que** l'étape d'amenée de la plaque chauffante (3) consiste à amener une plaque chauffante (3') présentant en sous-face une excroissance d'embossage central (31), de préférence de forme tronconique, de diamètre inférieur à l'ouverture supérieure (10) du contenant horticole (1).

## Patentansprüche

1. Gartenbehälter (1), der eine obere Öffnung (10) aufweist, die von einer oberen Randleiste (11) umgeben und geeignet ist, durch einen Deckel (2) verschlossen zu werden, wobei der Behälter (1) einen umlaufenden Vorsprung (12) aus schmelzbarem Material, mit einer Schmelztemperatur unterhalb der Schmelztemperatur des Deckels (2), auf seiner oberen Randleiste (11) um seine obere Öffnung (10) herum umfasst, **dadurch gekennzeichnet, dass** der umlaufende Vorsprung (12) im Bereich des die obere Öffnung (10) begrenzenden Innenrandes der oberen Randleiste (11) gelegen ist.

2. Gartenbehälter nach Anspruch 1, **dadurch gekennzeichnet, dass** der umlaufende Vorsprung (12) beim Formen des Behälters (1) selbst in den Behälter integriert wird.

3. Behälter nach einem der vorhergehenden Ansprüche, **dadurch gekennzeichnet, dass** er mit einem Deckel überzogen ist, der von einem Tuch oder einer Folie aus Vliesmaterial gebildet ist, welche(s) durch lokale Imprägnierung mit dem Material des umlaufenden Vorsprungs (12), die durch Schmelzen des Materials des umlaufenden Vorsprungs (12) aus schmelzbarem Material mit einer Schmelztemperatur unterhalb der Schmelztemperatur des Deckels (2) erreicht wird, klebend gehalten wird, wobei vorzugsweise der Gartenbehälter mit Erde oder einem Substrat gefüllt ist.

4. Gartenbehälter nach einem der Ansprüche 1 bis 3, **dadurch gekennzeichnet, dass** er mit einem eine entspannte, spannungslose und/oder leicht konkave Form aufweisenden Deckel überzogen ist, der vorzugsweise eine mittlere Bohrung umfasst, die geeignet ist, den Stiel einer Pflanze hindurch zu lassen, wenn diese durch die Bohrung wächst.

5. Gartenbehälter nach einem der Ansprüche 3 oder 4, **dadurch gekennzeichnet, dass** der Deckel aus einer Folie aus nicht gewebtem Fasermaterial, vorzugsweise auf der Basis von Polyester- und Viskosefasern ausgebildet ist.

6. Gartenbehälter nach einem der Ansprüche 3 bis 5, **dadurch gekennzeichnet, dass** der Deckel ein Flächengewicht von wenigstens 65 g/m², vorzugsweise von weniger als 100 g/m², weiterhin vorzugsweise von 65 bis 75 g/m² aufweist.

7. Gartenbehälter nach den vorhergehenden Ansprüchen, **dadurch gekennzeichnet, dass** der Querschnitt des umlaufenden Vorsprungs (12) dreieckig oder trapezförmig ist.

8. Gartenbehälter nach einem der vorhergehenden Ansprüche, **dadurch gekennzeichnet, dass** der Vorsprung (12) eine Höhe aufweist, die kleiner als die oder gleich der Dicke der oberen Randleiste (11) und der Seitenwand (1 a) des Gartenbehälters ist, und vorzugsweise der Vorsprung eine Höhe von mehr als 50 % der Dicke der oberen Randleiste und der Seitenwand des Gartenbehälters aufweist.

9. Gartenbehälter nach einem der vorhergehenden Ansprüche, **dadurch gekennzeichnet, dass** die Dicke des Vorsprungs 0,5 bis 2 mm, vorzugsweise 0,8 bis 1 mm beträgt.

10. Gartenbehälter nach einem der Ansprüche 8 oder 9, **dadurch gekennzeichnet, dass** die Dicke der oberen Randleiste und der Seitenwand des Gartenbehälters 0,5 bis 2 mm, vorzugsweise 0,8 bis 1 mm beträgt

11. Verfahren zum Herstellen und Verschließen eines Gartenbehälters (1) nach den Ansprüchen 1 bis 10, umfassend die aufeinanderfolgenden Schritte, die darin bestehen:
- einen Gartenbehälter (1) herzustellen, der eine obere Öffnung (10) aufweist, die von einer oberen Randleiste (11) eines umlaufenden Vorsprungs (12) aus schmelzbarem Material auf seiner oberen Randleiste (11) um seine obere Öffnung (10) herum umgeben ist,
- einen gerasterten Deckel (2), der eine Schmelztemperatur oberhalb der Schmelztemperatur des umlaufenden Vorsprungs (12) aufweist, auf die obere Randeiste (11) aufzusetzen, wobei dieser Deckel (2) dann auf dem umlaufenden Vorsprung (12) aufliegt,
- eine Heizplatte (3), deren Größe derart ist, dass sie den umlaufenden Vorsprung (12) bedeckt, mit dem umlaufenden Vorsprung in Kontakt zu bringen,
- wodurch das Schmelzen des umlaufenden Vorsprungs (12) bewirkt wird, das ermöglicht, den Deckel (2) durch Eindringen des geschmolzenen Materials des umlaufenden Vorsprungs (12) in das Raster des Deckels (2) zu versiegeln.

12. Verfahren nach Anspruch 11, **dadurch gekennzeichnet, dass** der erste Schritt zur Herstellung des Behälters durch Formen mit einer Form des Behälters (1), die eine Nut in Höhe des Bereiches zum Formen der oberen Randleiste (11) umfasst, durchgeführt wird, wobei die Nut geeignet ist, einen genau am Innenrand der oberen Randleiste (11) gelegenen umlaufenden Vorsprung beim Formen des Behälters zu bilden.

13. Verfahren nach einem der Ansprüche 11 oder 12, **dadurch gekennzeichnet, dass** der Schritt des Zuführens der Heizplatte (3) darin besteht, eine Heizplatte (3') zuzuführen, die an der Unterseite eine mittlere, vorzugsweise kegelstumpfförmige Hohlprägeausstülpung (31), mit einem Durchmesser, der kleiner als die obere Öffnung (10) des Gartenbehälters (1) ist, aufweist.

## Claims

1. A horticultural container (1) presenting a top opening (10) surrounded by a top rim (11) and suitable for being closed by a lid (2), said container (1) having a circumferential protuberance (12) of meltable material having a melting temperature lower than the melting temperature of the lid (2), the protuberance being on its top rim (11) around its top opening (10), the container being **characterized in that** the circumferential protuberance (12) is situated at the inner margin of the top rim (11) defining said top opening (10).

2. A horticultural container according to claim 1, **characterized in that** the circumferential protuberance (12) is made integrally with the container while molding the container (1) itself.

3. A container according to either preceding claim, **characterized in that** it is provided with a lid constituted by a sheet or foil of non-woven material stuck on by being locally impregnated with the material of said circumferential protuberance (12) as a result of melting said material of said circumferential protuberance (12) of material that melts at a melting temperature lower than the melting temperature of the lid (2), said horticultural container preferably being filled with earth or with a substrate.

4. A horticultural container according to any one of claims 1 to 3, **characterized in that** it is provided with a lid of relaxed shape, being floppy and/or slightly concave, preferably including a central hole suitable for passing the stalk of a plant when it grows through said hole.

5. A horticultural container according to claim 3 or claim 4, **characterized in that** said lid is made out of a sheet of non-woven fiber material, preferably based on viscose and polyester fibers.

6. A horticultural container according to any one of claims 3 to 5, **characterized in that** said lid weighs at least 65 g/m², and preferably less than 100 g/m², more preferably lying in the range 65 g/m² to 75 g/m².

7. A horticultural container according to the preceding claims, **characterized in that** the section of the circumferential protuberance (12) is triangular or trapezoidal.

8. A horticultural container according to any preceding claim, **characterized in that** said protuberance (12) is of a height less than or equal to the thickness of said top rim (11) and of the side wall (1a) of said horticultural container, and preferably said protuberance presents height greater than 50% of the thickness of said top rim and of said side wall of said horticultural container.

9. A horticultural container according to any preceding claim, **characterized in that** the thickness of said protuberance lies in the range 0.5 mm to 2 mm, and preferably in the range 0.8 mm to 1 mm.

10. A horticultural container according to claim 8 or claim 9, **characterized in that** the thickness of said top rim and of said side wall of said horticultural container lie in the range 0.5 mm to 2 mm, and preferably in the range 0.8 mm to 1 mm.

11. A method of making and closing a horticultural container (1) according to claims 1 to 10, comprising successive steps consisting in:
• making a horticultural container (1) having a top opening (10) surrounded by a top rim (11) with a circumferential protuberance (12) of meltable material on its top rim (11) around its top opening (10);
• placing a lid (2) in the form of a screen and presenting a melting temperature higher than the melting temperature of the circumferential protuberance (12) on the top rim (11), the lid (2) then resting on the circumferential protuberance (12);
• providing a hot plate (3) of a size suitable for covering the circumferential protuberance (12) and putting it into contact with the circumferential protuberance; and
• thus causing the circumferential protuberance (12) to melt and enabling the lid (2) to be sealed on by molten material from the circumferential protuberance (12) penetrating into the screen of the lid (2).

12. A method according to claim 11, **characterized in that** the first step of making said container is performed by molding with a mold (1) including a groove in the zone for molding the top rim (11), said groove being suitable for forming a said circumferential protuberance situated right at the inner margin of the top rim (11) when molding said container.

13. A method according to claim 11 or claim 12, **characterized in that** the step of providing the hot plate (3) consists in providing a hot plate (3') presenting a central embossing projection (31) on its under face, preferably of frustoconical shape, and of diameter smaller than the top opening (10) of the horticultural container (1).
